**Europäisches Patentamt**

**European Patent Office**

**Office européen des brevets**

(11) Numéro de publication : **0 336 785 B1**

# FASCICULE DE BREVET EUROPEEN

(45) Date de publication du fascicule du brevet :
29.04.92 Bulletin 92/18

(51) Int. Cl.$^5$ : **B62B 7/04**

(21) Numéro de dépôt : **89400449.8**

(22) Date de dépôt : **17.02.89**

(54) **Poussette pour bébés et jeunes enfants.**

(30) Priorité : **06.04.88 FR 8804508**

(43) Date de publication de la demande :
**11.10.89 Bulletin 89/41**

(45) Mention de la délivrance du brevet :
**29.04.92 Bulletin 92/18**

(84) Etats contractants désignés :
**BE DE ES GB IT**

(56) Documents cités :
**FR-A- 523 181**
**GB-A- 1 416 441**
**US-A- 4 664 396**

(73) Titulaire : **ATELIERS REUNIS CADDIE**
**13, rue de la Mairie**
**F-67300 Schiltigheim (FR)**

(72) Inventeur : **Le Marchand, Alain**
**1, Rue de Vendée**
**F-67116 Reichstett (FR)**
Inventeur : **Frey, Jean-Pierre**
**32, Rue Molkenbronn**
**F-67380 Lingolsheim (FR)**

(74) Mandataire : **Boutin, Antoine et al**
**Cabinet Tony-Durand, 77, Rue Boissière**
**F-75116 Paris (FR)**

## Description

La présente invention concerne les poussettes pour bébés et jeunes enfants. En général ces poussettes comportent un châssis équipé de deux paires de roues et sur lequel est monté un siège souple apte à recevoir un jeune enfant placé face à l'avant. A son extrémité arrière, ce châssis est pourvu d'une poignée de manoeuvre située à la hauteur voulue pour pouvoir servir d'organe de poussée et de manoeuvre de la poussette correspondante.

Une poussette de ce genre est connue notamment par le document FR-A-523.181, qui correspond au préambule de la revendication 1.

Dans la plupart des modèles existants, le châssis est réalisé sous forme pliante afin de permettre la réduction d'encombrement de celui-ci lorsque la poussette n'est pas utilisée ou bien encore lors du transport de celle-ci dans une voiture.

Toutefois les poussettes à châssis pliant sont relativement fragiles et les manoeuvres de pliage et dépliage nécessitent de connaître la succession d'opérations à réaliser dans l'un et l'autre cas. Il est donc exclu de pouvoir mettre de telles poussettes à la libre disposition d'usagers éventuels dans des lieux publics, tels que des magasins de vente, des musées, des gares ou aéroports, etc.

Il en est également de même lorsqu'il s'agit de poussettes destinées à être manoeuvrées par différents utilisateurs successifs, par exemple pour le transport de jeunes enfants dans des hopitaux ou des cliniques.

C'est pourquoi la présente invention a pour objet une poussette pour enfant qui est spécialement conçue pour de telles applications.

A cet effet, cette poussette est du type à châssis rigide et caractérisée en ce que son châssis rigide est constitué par deux longerons latéraux parallèles inclinés par rapport à un plan horizontal, réunis par des traverses à leurs extrémités et dont les extrémités inférieures sont équipées des roues avant, cependant que dans leur partie médiane ces longerons prennent appui sur deux jambes de soutien inclinées vers l'arrière par rapport aux longerons et pourvues des roues arrière, les branches inférieures des deux longerons comportant un coude vers l'intérieur réduisant leur écartement et permettant ainsi l'emboîtement de l'extrémité avant d'une telle poussette entre les deux jambes de soutien d'une autre poussette identique.

Ainsi, contrairement à ce qui est le cas pour la plupart des poussettes pour enfants, le châssis de la présente poussette n'est pas pliant, mais au contraire rigide et conçu avec une structure lui assurant une très grande robustesse permettant sa mise à la libre disposition d'usagers éventuels dans les lieux publics. Par ailleurs, la conception de ce châssis permet l'emboîtement d'une série de poussettes de ce genre lorsqu'elles sont en attente d'utilisation, ce qui a l'avantage de réduire leur encombrement.

Selon une autre caractéristique de la poussette selon l'invention, le siège d'enfant prévu dans celle-ci comporte un cadre rectangulaire rigide monté pivotant sur les longerons latéraux autour d'un axe horizontal transversal situé au voisinage de la jonction de ces longerons avec les jambes d'appui, la largeur de ce cadre étant inférieure à l'écartement des branches supérieures des deux longerons latéraux, mais supérieure à l'écartement des branches inférieures de ceux-ci.

Cependant d'autres particularités et avantages de la présente poussette apparaitront au cours de la description suivante. Celle-ci est donnée en référence au dessin annexé à simple titre indicatif, et sur lequel :

La figure 1 est une vue en perspective d'une poussette selon l'invention.

La figure 2 en est une vue en coupe schématique selon la ligne II-II de la figure 1.

La figure 3 est une vue schématique en perspective des deux éléments constitutifs essentiels de la présente poussette, c'est-à-dire son châssis d'une part et le cadre du siège pour enfant d'autre part, ces deux éléments étant représentés avant assemblage.

La figure 4 est une vue en perspective illustrant l'emboîtement de deux poussettes l'une dans l'autre en attente d'utilisation.

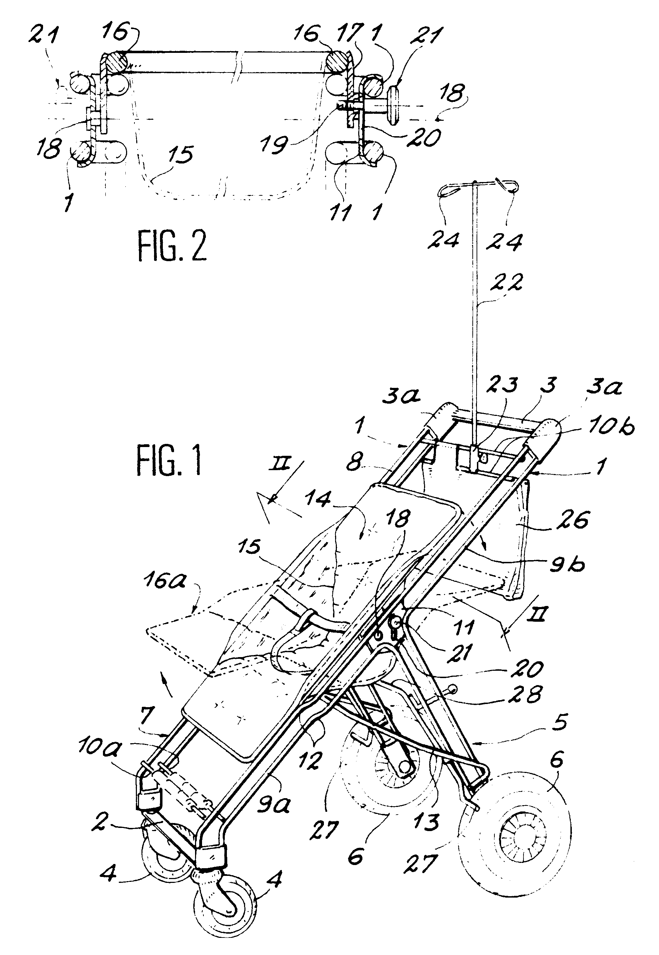

Le châssis de la poussette représentée aux figures 1 et 2 est essentiellement constitué par deux longerons latéraux inclinés 1 réunis par des traverses horizontales 2 et 3 à leurs extrémités, la traverse 3 située à l'extrémité supérieure constituant par ailleurs la poignée de manoeuvre de la poussette. Les extrémités inférieures de ces longerons sont équipées des deux roues avant 4 de la poussette, celles-ci étant de type pivotant.

Dans leur partie médiane, les longerons 1 prennent appui sur deux jambes de soutien 5 inclinés vers l'arrière et dont les extrémités inférieures portent les roues arrière 6 non pivotantes de la poussette. Ces dernières sont avantageusement des roues gonflables de grand diamètre.

Du fait de la structure ainsi prévue, le châssis est symétrique et chacun de ses côtés affecte en quelque sorte la forme d'un Y renversé dont les branches divergentes sont constituées respectivement par l'une des jambes de soutien 5 et la branche inférieure 7 du longeron latéral 1 correspondant.

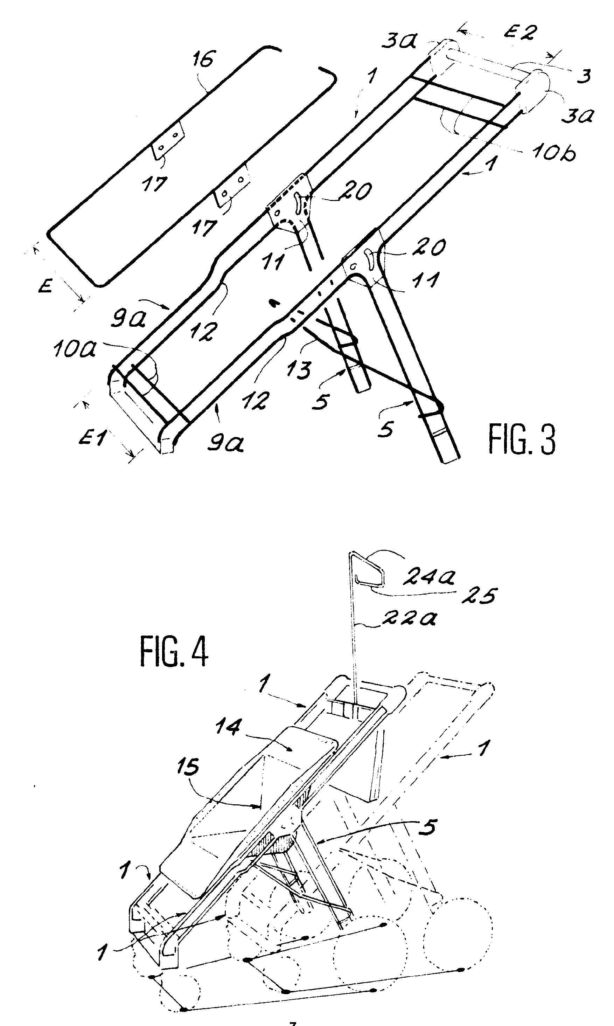

Ainsi qu'il apparait clairement sur les figures 1 et 3, chacun des longerons latéraux 1 est constitué par deux fils métalliques superposés disposés dans un même plan vertical. Le fil supérieur 8 de chacun de ces longerons s'étend de façon continue sur toute la longueur de celui-ci. Quant au fil inférieur, il est en réalité constitué par deux fils distincts 9a et 9b qui sont coudés en L et disposés de façon inversée afin que leurs branches inférieures soient placées parallèlement l'une à l'autre pour constituer l'une des jambes de soutien 5, cependant que la branche supérieure de chacun de ces fils constitue l'élément inférieur de l'une des parties du longeron latéral 1 correspondant. Les différents fils parallèles ainsi prévus sont solidarisés par des entretoises 10a et 10b en fils métalliques ainsi que par plaques verticales de liaison prévues sur chaque côté à l'endroit de la jonction des jambes de soutien avec les longerons latéraux 1. En outre, la solidarisation des deux côtés du châssis est complétée par la traverse inférieure 2 portant les roues avant 4, ainsi que par la traverse supérieure 3 fixée au moyen d'embouts 3a. Ainsi qu'il sera décrit plus loin, les plaques verticales de liaison 11 assurent par ailleurs le montage du siège pour enfant.

Il convient de noter que les branches inférieures 7 des longerons latéraux 1 présentent un coude 12 dirigé vers l'intérieur, de sorte que l'écartement des parties inférieures de ces branches est plus faible que celui des branches supérieures des longerons 1 et également des jambes de soutien 5. Dans ces conditions, il est possible d'emboîter la partie inférieure avant d'une telle poussette entre les jambes de soutien 5 d'une autre poussette située devant. Cette possibilité d'emboîtement est du reste illustrée sur la figure 4 où la poussette arrière est figurée en traits mixtes alors que la poussette avant est représentée en traits pleins.

La structure du présent chariot est renforcée par un arceau métallique 13 reliant les extrémités inférieures des jambes de soutien 5 aux deux longerons latéraux 1, à proximité des coudes 12 de ceux-ci. Cependant comme l'écartement des branches latérales de cet arceau est le même que celui des jambes de soutien 5, la présence de cet arceau ne gêne en aucune façon l'emboîtement des poussettes les unes à l'intérieur des autres.

Le siège pour enfant prévu dans la présente poussette consiste en un élément souple 14 en tissu, matière plastique ou similaire dont la partie médiane comporte une poche en creux 15 pouvant servir de siège proprement dit. Cet élément souple est tendu sur un cadre rectangulaire rigide 16 monté pivotant sur les longerons 1 du châssis. L'articulation de ce cadre est assurée par l'intermédiaire de deux plaques de montage 17 portées par les côtés du cadre 16 en leur milieu et qui sont placées contre la face interne des plaques de liaison 11 prévues au milieu des longerons. L'axe transversal de pivotement du cadre 16 est matérialisé par deux axes 18 reliant chaque plaque de montage 17 à la plaque de liaison 11 correspondante. De plus chaque patte de montage est munie d'une tige filetée 19 engagée dans une lumière 20 en forme d'arc de cercle prévue dans la plaque de liaison correspondante 11, un écrou de blocage pourvu d'un bouton de manoeuvre 21 étant monté sur chaque tige 19 pour permettre l'immobilisation du cadre 16 dans la position angulaire voulue.

Toutefois, il convient de noter que le basculement de ce cadre vers l'avant est limité par le fait que l'écartement E des branches de ce cadre est supérieur à l'écartement E1 des extrémités inférieures des longerons 1. Dans ces conditions, ce cadre vient buter sur le dessus de ces longerons, ce qui limite son basculement possible vers l'avant dans la position représentée à la figure 1. Cependant l'écartement E des côtés du cadre 16 est inférieur à l'écartement E2 des branches supérieures des longerons 1 de façon à permettre le passage de ce cadre entre ces branches pour son basculement vers l'arrière. Dans ces conditions, ce cadre peut être amené dans une position sensiblement horizontale telle que la position 16a représentée en traits mixtes sur la figure 1, position dans laquelle l'enfant placé sur le support 14 est à peu près couché à l'horizontale. La limite du basculement en arrière est déterminée par la venue en butée des tiges filetées contre l'extrémité correspondante des lumières 20 des plaques de liaison 11.

Mais le présent support mobile peut être immobilisé dans toute position intermédiaire voulue entre ces deux positions extrêmes, lesquelles correspondent respectivement à une position assise de l'enfant et à une position couchée de celui-ci.

La présente poussette est avantageusement pourvue d'organes de freinage permettant d'immobiliser les roues de l'un de ses deux trains de roues, par exemple ses roues arrière 6. Ces organes de blocage peuvent être constitués par les extrémités 27 d'un arceau mobile 28 disposé entre les deux jambes d'appui 5. Mais tous autres organes appropriés de blocage pourraient être prévus.

Compte tenu que le châssis de la présente poussette est entièrement rigide et que la structure particulière de celui-ci lui assure une très grande robustesse, cette poussette peut être mise à la libre disposition d'usagers éventuels dans des lieux publics, par exemple à l'intérieur de magasins, ou bien encore dans des musées, dans des gares ou des aéroports. Pour de telles applications, la présente poussette a l'avantage de pouvoir être emboîtée avec d'autres poussettes identiques lorsque ces poussettes sont en attente, ce qui permet de réduire leur encombrement.

Un autre avantage de la présente poussette réside dans le fait que l'emploi de roues gonflables de grand diamètre pour constituer les roues arrière réalise en quelque sorte une suspension élastique du châssis, et ce de façon simple et efficace.

Ainsi qu'il a déjà été indiqué, la poussette selon l'invention est également conçue pour pouvoir être employée pour le transport de jeunes enfants dans des hopitaux, des cliniques ou autres établissements de soins médicaux ou autres. Dans un tel cas, cette poussette peut être avantageusement munie d'un support de type particulier permettant de suspendre un flacon pour transfusion sanguine ou injection d'un liquide de traitement. Ce support peut avantageusement consister en un bras vertical 22 fixé de façon amovible dans une douille d'immobilisation 23 portée par le châssis de la poussette. L'extrémité supérieure de ce bras est pourvue d'un ou plusieurs crochets 24 permettant de suspendre un flacon ou tout autre équipement voulu. Dans l'exemple représenté à la figure 4, le support ainsi prévu est constitué par un fil métallique 22a dont l'extrémité supérieure 24a est recourbée sur elle-même sous la forme d'un trapèze dont le côté inférieur 25 est ouvert pour permettre l'engagement d'un organe d'attache de l'élément à suspendre. Mais il est bien évident que le support ainsi prévu pourrait affecter toute autre forme appropriée suivant les cas et applications.

Toujours dans cette même application particulière, la présente poussette peut être équipée d'une poche 26 destinée à recevoir un dossier médical, cette poche étant suspendue aux entretoises supérieures 10b s'étendant entre les deux longerons latéraux 1 du châssis.

Mais il va de soi que suivant les applications prévues, la présente poussette pourrait recevoir tous autres équipements complémentaires appropriés. Par ailleurs, il est bien évident qu'au lieu d'être constitué par des fils métalliques, le châssis pourrait être réalisé au moyen de tubes métalliques.

## Revendications

1. Poussette pour bébé dont le châssis, monté sur deux roues avant et deux roues arrière, porte un siège pour enfant, monté articulé sur ce châssis, ce dernier étant rigide, caractérisé en ce que ledit châssis est constitué par deux longerons latéraux parallèles (1) inclinés par rapport à un plan horizontal, réunis par des traverses à leurs extrémités et dont les extrémités inférieures sont équipées des roues avant (4), cependant que dans leur partie médiane ces longerons (1) prennent appui sur deux jambes de soutien (5) inclinées vers l'arrière par rapport aux longerons et pourvues des roues arrière (6), les branches inférieures (7) des deux longerons comportant un coude (12) vers l'intérieur réduisant leur écartement et permettant ainsi l'emboîtement de l'extrémité avant d'une telle poussette entre les deux jambes de soutien (5) d'une autre poussette identique.

2. Poussette selon la revendication 1, caractérisée en ce que le siège (14) de bébé comporte un cadre rectangulaire rigide (16) monté pivotant sur les longerons latéraux (1) autour d'un axe horizontal transversal situé au voisinage de la jonction de ces longerons avec les jambes d'appui (5), la largeur de ce cadre étant inférieure à l'écartement des branches supérieures des deux longerons latéraux (1), mais supérieure à l'écartement des branches inférieures (7) de ceux-ci.

3. Poussette selon la revendication 2, caractérisée en ce que le cadre (16) du siège pour enfant s'articule sur deux plaques verticales (11) disposées à l'endroit de la jonction entre les longerons latéraux (1) et les jambes d'appui (5) et qui comportent chacune des moyens de blocage permettant d'immobiliser le cadre du siège (14) dans la position angulaire voulue.

4. Poussette selon les revendications précédentes, caractérisée en ce que les longerons latéraux (1) du châssis sont constitués chacun par deux fils ou tubes métalliques parallèles disposés l'un au dessus de l'autre dans un même plan vertical et solidarisés par des plaques de liaison formant entretoises, chaque jambe d'appui (5) étant également formée par deux fils ou tubes métalliques parallèles.

5. Poussette selon la revendication 4, caractérisée en ce que le fil ou tube inférieure de chaque longeron latéral (1) est constitué par deux éléments distincts (9a, 9b) coudés en L et disposés de façon inversée afin que leurs branches inférieures soient disposées parallèlement pour former la jambe d'appui correspondante (5).

6. Poussette selon l'une des revendications précédentes, caractérisée en ce que pour son utilisation dans des hopitaux ou cliniques, son châssis porte un bras vertical (22 ou 22a) dont l'extrémité supérieure est pourvue d'un élément permettant l'accrochage d'un flacon pour transfusion sanguine ou injection d'un liquide de traitement.

## Patentansprüche

1. wagen für Babys mit einem Fahrgestell, das auf zwei Vorderrädern und zwei Hinterrädern angeordnet ist und einen Sitz für das Kleinkind aufweist, wobei der Sitz fest ausgebildet und schwenkbar an dem Fahrgestell aufgehängt ist, dadurch gekennzeichnet, daß das Fahrgestell zwei seitliche und geneigt zu einer Horizontalebene angeordnete Holme (1) aufweist, die an ihren Enden durch Querträger verbunden sind, wobei die unteren Enden mit den Vorderrädern (4) versehen sind, während die Holme (1) in ihrem Mittelbereich auf zwei Stützbeinen (5) abgestützt sind, die gegenüber den Holmen nach hinten geneigt vorgesehen sind und die Hinterräder (6) tragen, und daß die unteren Teile (7) der beiden Holme einen nach innen gerichteten Vorsprung (12) aufweisen, der ihren gegenseitigen bestand verringert und zugleich das Ineinanderschieben des Vorderteils eines solchen wagens zwischen die beiden Stützbeine (5) eines weiteren, identisch ausgebildeten wagens gestattet.

2. wagen nach Anspruch 1, dadurch gekennzeichnet, daß der Sitz (14) des Babys einen rechteckigen festen Rahmen (16) aufweist, der schwenkbar an den seitlichen Holmen (1) um eine horizont durchgehende Achse in der Nähe der Verbindungsstellen der Holme mit den Stützbeinen (5) angeordnet ist, daß die Breite dieses Rahmens kleiner als die Entfernung der oberen Teile der beiden seitlichen Holme (1), jedoch größer als der gegenseitige bestand zwischen den unteren Teilen (7) der Holme ausgebildet ist.

3. wagen nach Anspruch 2, dadurch gekennzeichnet, daß der Rahmen (16) für den Sitz des Kleinkinds schwenkbar an zwei vertikalen Platten (11) aufgehängt ist, die an der Verbindungsstelle zwischen den seitlichen Holmen (1) und den Stützbeinen (5) angeordnet sind und die jeweils Blockiermittel zum Feststellen des Rahmens des Sitzes (14) in der gewünschten Winkellage aufweisen.

4. wagen nach den vorangehenden Ansprüchen 1 bis 3, dadurch gekennzeichnet, daß die seitlichen Holme (1) des Fahrgestells jeweils an zwei Drähten oder Metallrohren gebildet sind, die parallel und übereinander in gleicher Vertikalebene angeordnet und über Verbindungsplatten, die Querstreben bilden, aneinander befestigt sind, und daß jedes Stützbein (5) ebenso von zwei Drähten oder Metallrohren in Parallelanordnung gebildet ist.

5. wagen nach Anspruch 4, dadurch gekennzeichnet, daß der untere Draht oder das interne Rohr jedes seitlichen Holms (1) aus zwei unterschiedlichen Elementen (9a, 9b) besteht, die L-förmig gebogen und so zueinander angeordnet sind, daß ihre unteren beschnitte parallel zueinander verlaufen und das entsprechende Stützbein (5) bilden.

6. wagen nach einem der Ansprüche 1 bis 5, dadurch gekennzeichnet, daß sein Fahrgestell, zur Benutzung in Krankenhäusern oder Kliniken eine Vertikalstütze (22 oder 22a) trägt, deren oberes Ende mit einem Element zum Aufhängen eines Behälters für eine Bluttransfusion oder eine der Behandlung dienende Flüssigkeitsinjektion versehen ist.

## Claims

1. A push-chair for a baby wherein the chassis, mounted on two front wheels and two rear wheels, carries a baby seat which is pivotally mounted on said chassis, the latter being rigid, **characterized** in that said chassis is formed of two parallel lateral structural members (1) inclined in relation to an horizontal plane, interconnected by cross-bars at their ends, the lower ends thereof being equipped with the front wheels (4) while said lateral structural members (1) rest through their median portion upon two supporting legs (5) which are inclined towards the rear in relation to the lateral structural members and are provided with the rear wheels (6), the lower branches (7) of the two lateral structural members including an elbow (12) towards the interior which reduces their spacing and thus allows the front end of such a push-chair to be stacked between the two supporting legs (5) of another identical push-chair.

2. A push-chair according to Claim 1, characterized in that the baby seat (14) comprises a rigid rectangular frame (16) pivotally mounted on the lateral structural members (1) about a transversal horizontal axis located in the vicinity of the junction of said lateral members with the supporting legs (5), the width of said frame (16) being narrower than the spacing of the upper branches of the two lateral members (1), but wider than the spacing of the lower branches (7) thereof.

3. A push-chair according to Claim 2, characterized in that the frame (16) of the baby seat is pivotally mounted on two vertical plates (11) located at the junction between the lateral members (1) and the supporting legs (5), each of said plates comprising locking means for immobilizing the frame of the seat (14) in the desired angular position.

4. A push-chair according to the previous Claims, characterized in that each one of the lateral structural members (1) of the chassis is constituted by two parallel metal wires or metal tubes arranged one above the other in a same vertical plane and bound up together by connecting plates forming spacers, each supporting leg (5) being also formed of two parallel metal wires or tubes.

5. A push-chair according to Claim 4, characterized in that the lower wire or tube of each lateral structural member (1) is constituted by two separate elements (9a, 9b) which are bent into a L-shape and are arranged in an inverted manner in order that their lower branches may be disposed parallel to each other for forming the corresponding supporting leg (5).

6. A push-chair according to one of the previous Claims, characterized in that, for its utilization in hospitals or clinics, its chassis carries a vertical arm (22 or 22a), the upper end of which is provided with an element which allows the hooking up of a flask for blood transfusion or for the injection of a treatment fluid.

FIG. 2

FIG. 1

FIG. 3

FIG. 4